# DEMANDE DE BREVET EUROPEEN

(11) **EP 3 339 152 A1**
(43) Date de publication de la demande: **27.06.2018**
(21) Numéro de dépôt: 17208078.0
(22) Date de dépôt: 18.12.2017
(51) Int. Cl.: B62K 7/02, B62K 5/02, B62K 19/40, B60J 5/06, B60J 5/12, B62J 17/00

(54) **VÉHICULE LÉGER COMPORTANT UN HAYON ARRIÈRE**

(30) Priorité: 19.12.2016 FR 1662725
(71) Demandeur: Cyclopolitain, 69001 Lyon (FR)
(72) Inventeur: DEVEZE, Alain, 69560 Saint Romain en Gal (FR)
(74) Mandataire: Chevalier, Renaud Philippe

(57) **Abrégé**

L'invention a pour objet un véhicule comprenant à l'avant un pédalier de propulsion (10) prévu pour le conducteur, remarquable en ce qu'il comporte à l'arrière de chaque côté un profilé (40) disposé sensiblement verticalement, comprenant une rainure tournée vers l'intérieur du véhicule, et un hayon (42) formant une plaque coulissant dans les rainures des deux profilés (40), qui est dans la direction transversale cintrée par une déformation élastique sous l'effet d'un serrage donné par la distance transversale entre ces deux rainures.

## Description

La présente invention concerne un véhicule léger à traction par pédale, comportant un hayon arrière.

Les véhicules légers, en particulier les véhicules entraînés par le conducteur utilisant un pédalier, doivent présenter une masse très réduite afin de limiter l'effort fourni.

Un type de véhicule connu équipé d'une roue à l'avant et de deux roues à l'arrière, comporte une place avant pour le conducteur disposant d'un pédalier, et deux places arrière permettant de transporter de manière confortable des personnes sur des petites distances. Ce type de véhicule se développe en particulier dans les zones piétonnières ou touristiques, où la circulation des véhicules à moteur est fortement réduite pour limiter le bruit et la pollution afin d'assurer un agrément élevé pour les piétons.

Ces véhicules peuvent disposer d'une carrosserie comprenant un pavillon les couvrants ainsi qu'un hayon arrière, permettant de mettre les passagers à l'abri du soleil, de la pluie ou du vent pour assurer un meilleur confort. En particulier le hayon peut être amovible pour permettre un usage dans différentes conditions.

Un problème qui se pose est de prévoir un hayon qui soit rigide, léger, avec un assemblage fiable permettant de réaliser facilement et sans outillage la dépose et la repose.

En effet ces véhicules peuvent être conduits par différentes personnes, notamment par du personnel saisonnier sans qualification particulière. Il faut que ce personnel puisse régulièrement suivant les demandes ou les conditions climatiques, effectuer rapidement et de manière sécurisée l'installation ou la dépose du hayon.

La présente invention a notamment pour but de résoudre ces problèmes.

Elle propose à cet effet un véhicule comprenant à l'avant un pédalier de propulsion prévu pour le conducteur, remarquable en ce qu'il comporte à l'arrière de chaque côté un profilé disposé sensiblement verticalement, comprenant une rainure tournée vers l'intérieur du véhicule, et un hayon formant une plaque coulissant dans les rainures des deux profilés, qui est dans la direction transversale cintrée par une déformation élastique sous l'effet d'un serrage donné par la distance transversale entre ces deux rainures.

Un avantage de ce véhicule est qu'un opérateur peut facilement et sans outillage, introduire la plaque du hayon par le haut dans les deux rainures en la cintrant légèrement pour réduire sa largeur afin de rentrer dans ces rainures, puis la descendre jusqu'en bas en la faisant coulisser.

Le hayon est rapidement posé ou déposé par un simple coulissement vertical, sans outillage et sans opération complexe. De plus on obtient un hayon mis en tension transversalement grâce à sa déformation élastique imposée par la distance réduite entre les rainures, ce qui bloque la plaque au fond des rainures en évitant un jeu provoquant des vibrations, de l'usure et du bruit.

Le véhicule selon l'invention peut comporter de plus une ou plusieurs des caractéristiques suivantes, qui peuvent être combinées entre elles.

Avantageusement, les profilés donnent aux bords du hayon un angle compris entre 20 et 40° par rapport à la direction transversale du véhicule. On obtient ainsi un cintrage esthétique du hayon qui lui donne de la rigidité.

Avantageusement, les bords latéraux du hayon présentent un pliage sur la longueur s'ajustant dans une forme correspondante des rainures des profilés. Ces pliages bloquent les bords du hayon dans les rainures.

Dans ce cas, les rainures des profilés peuvent comporter dans une section transversale deux terminaisons adaptées pour recevoir les pliages du hayon qui peut être retourné suivant un axe vertical.

Avantageusement, le hayon comporte une découpe centrale formant une poignée. Cette poignée est réalisée de manière économique.

Avantageusement, le véhicule comporte un joint d'étanchéité prévu pour venir en appui en haut du hayon sur sa face intérieure.

En particulier, le hayon peut être formé dans une plaque en acrylonitrile butadiène styrène « ABS », en polycarbonate « PC » ou en polyéthylène « PE ».

En complément, le véhicule peut comporter une banquette arrière disposée transversalement, comprenant un panneau d'assise et un panneau de dossier qui sont reliés par des pivots transversaux permettant leur soulèvement.

Dans ce cas, avantageusement, le panneau d'assise comporte à l'avant un premier pivot transversal relié au châssis du véhicule, et le panneau de dossier comporte à la base un deuxième pivot transversal relié à l'arrière du panneau d'assise.

De plus, la partie supérieure de l'assise peut être reliée par un troisième pivot transversal à un panneau supérieur, qui est lui-même relié par un quatrième pivot transversal à une partie supérieure de la carrosserie.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue de côté d'un véhicule léger à pédales suivant l'invention ;
- la figure 2 est une vue en perspective de ce véhicule présentant son hayon en cours de fermeture ;
- la figure 3 est une vue de ce véhicule présentant de manière éclatée les principaux éléments de sa carrosserie ;
- les figures 4 et 5 présentent en coupe suivant le plan de coupe IV-IV, respectivement un profilé latéral du système de hayon, et le système de hayon complet ;
- les figures 6 et 7 présentent en coupe suivant un plan vertical passant par l'axe longitudinal du véhicule, respectivement le haut et le bas de ce système de hayon ;
- la figure 8 est une vue de côté du véhicule présentant la banquette arrière ouverte.
- la figure 9 est une vue de la face arrière de la banquette en position installée ;
- la figure 10 est une vue de détail du pivot reliant le dossier à l'assise, la banquette étant complètement soulevée ; et
- les figures 11 et 12 sont des vues de côté du véhicule, présentant la banquette arrière successivement en cours de soulèvement et entièrement soulevée.

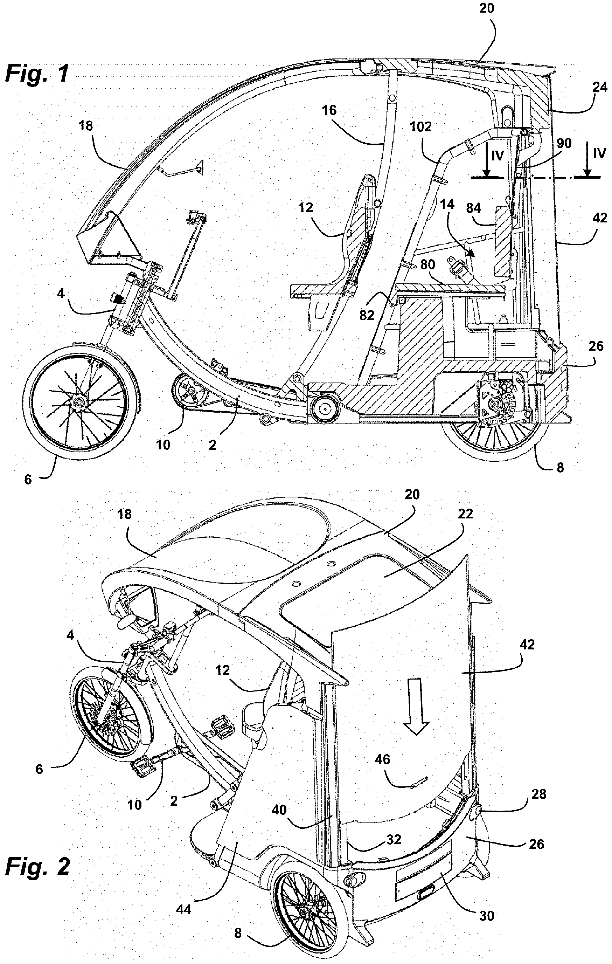

Les figures 1, 2 et 3 présentent un véhicule à pédales comportant un châssis 2 recevant à l'avant une fourche 4 de guidage d'une roue avant 6, et à l'arrière un essieu supportant deux roues arrière 8. Une place centrale avant pour le conducteur comporte un siège avant 12, et un pédalier 10 entraînant par une chaîne les roues arrière 8.

L'arrière du véhicule comporte une banquette 14 prévue pour recevoir deux personnes.

Le véhicule est équipé d'une carrosserie légère supportée par une ossature tubulaire 16, comprenant à l'avant un pare-brise 18 remontant jusqu'au-dessus du conducteur, puis dans le prolongement un pavillon 20 réalisé par le rotomoulage d'une matière plastique, comprenant une fenêtre de toit 22, et une traverse arrière 24 formant à l'arrière un bandeau transversal qui redescend sur une petite hauteur.

La carrosserie comporte en dessous des passagers un caisson arrière 26 réalisé par le rotomoulage d'une matière plastique, qui se termine par un bandeau arrière supportant des feux 28 et une plaque d'identification 30 du véhicule.

L'arrière du véhicule comporte de chaque côté un montant arrière sensiblement vertical 32 formé par un tube en aluminium de section carrée, dont les extrémités sont insérées en bas dans le caisson arrière 26 et en haut dans la traverse arrière 24 du pavillon 20, afin de relier rigidement ces éléments.

De chaque côté du véhicule un profilé en aluminium 40 fixé sur le montant 32, reçoit le bord arrière d'un panneau latéral 44 formé par une plaque en matière plastique, qui ferme le côté des places arrière.

Un hayon arrière 42 formé par une plaque en matière plastique, comportant de chaque côté un bord latéral fixé sur le profilé 40, présente une largeur un peu supérieure à la distance transversale entre ces profilés de manière à former un cintrage vers l'arrière qui suit le cintrage du caisson arrière 26.

En particulier le hayon arrière 42 peut être formé de manière économique par une plaque en acrylonitrile butadiène styrène « ABS », en polycarbonate « PC » ou en polyéthylène « PE ».

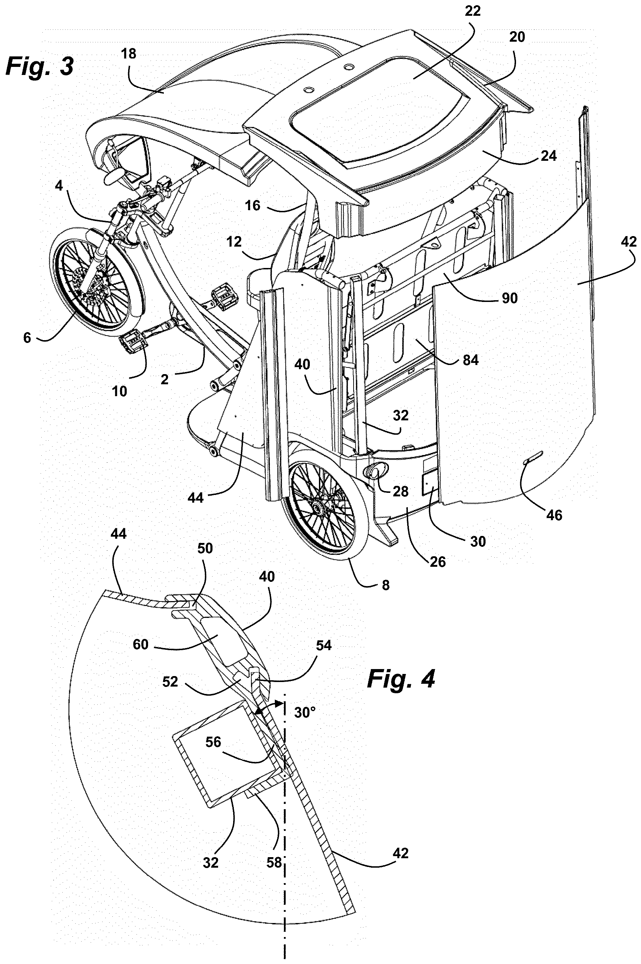

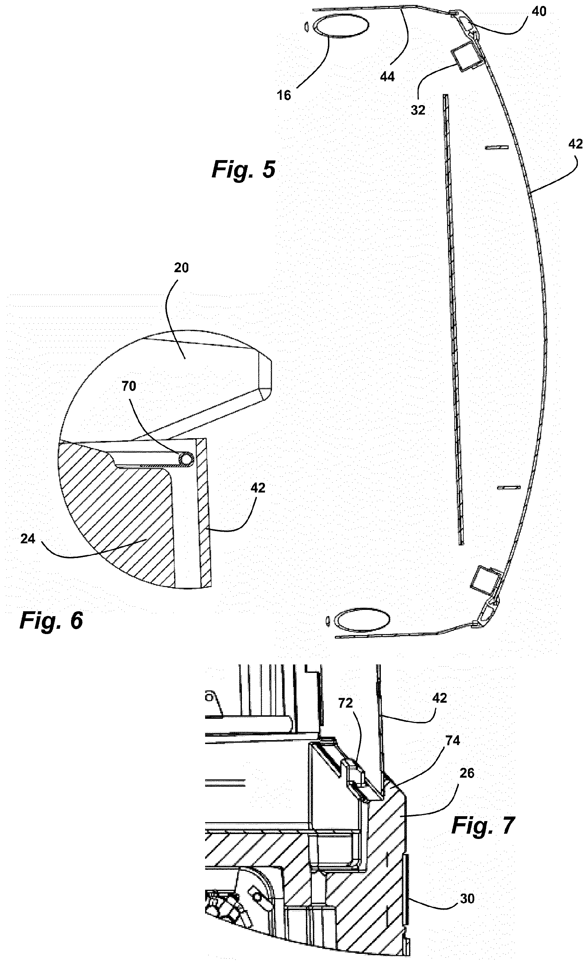

Les figures 4 et 5 présentent la section carrée de chaque montant vertical 32, comportant une face arrière inclinée de 30° par rapport à l'axe transversal du véhicule.

Le profilé 40 présentant une section transversale sensiblement plate, comporte vers l'intérieur du véhicule une partie plane 56 venant à plat sur la face arrière du montant arrière 32, qui se termine du côté intérieur par un rebord 58 formant un angle droit, en appui sur le côté intérieur de ce montant pour assurer un calage du profilé.

Le profilé 40 peut être fixé sur le montant arrière 32 par tout moyen pour former un ensemble rigide, notamment par des vis disposées sur le rebord 58, afin de laisser libre la partie plane 56 de ce profilé recevant l'appui du hayon 42 posé à plat dessus.

Le profilé 40 comporte successivement à partir du montant arrière 32, une première rainure 52 tournée vers l'intérieur, une cellule fermée 60 donnant de la rigidité, puis une deuxième rainure 50 tournée vers l'avant, recevant le bord arrière du panneau latéral 44.

La première rainure 52 du profilé 40 comporte une entrée unique, puis deux terminaisons qui s'éloignent l'une de l'autre avec un petit angle par rapport à cette entrée, en présentant une forme générale en « Y ». Chaque bord latéral du hayon 42 comporte un pliage continu 54 sur une petite largeur, formant un petit angle, de manière à insérer ce pliage dans la terminaison de la première rainure 52 disposée la plus en arrière.

Le hayon 42 est inséré par le haut en même temps dans les rainures 52 des deux profilés 40, puis descendu en coulissant dans ces rainures jusqu'en bas. A l'inverse pour la dépose du hayon 42, il est soulevé jusqu'en haut des rainures 52 pour le retirer des profilés 40. Une poignée 46 formée par une fente horizontale découpée vers le bas du hayon 42, permet d'y engager la main pour faciliter la manoeuvre de ce hayon.

Le pliage 54 de chaque bord latéral du hayon 42 engagé dans une terminaison de la rainure 52, formant un angle identique à celui de cette terminaison, permet à la fois un coulissement vertical du hayon, et un maintien transversal des bords en réalisant un blocage.

En effet une traction sur les bords du hayon 42 vers l'intérieur, par exemple avec une poussée sur le hayon réalisée dans le véhicule, entraînerait un retrait des côtés du hayon qui voudraient sortir des rainures 52. Cette sortie est empêchée par le pliage 54 des bords du hayon 42, évitant un coulissement transversal dans les rainures 52.

Les deux terminaisons de chaque rainure 52, tourné l'une vers l'avant et l'autre vers l'arrière, permettent de retourner suivant un axe vertical la plaque du hayon 42 en présentant son autre côté vers l'extérieur du véhicule. Suivant le sens de montage du hayon 42, le pliage 54 de chaque bord du hayon 42 vient dans la terminaison avant ou arrière de la rainure 52 de son profilé 40.

On peut en particulier disposer deux publicités différentes de chaque côté de la plaque du hayon 42, et le retourner régulièrement pour présenter au public l'un ou l'autre de ces marquages.

La figure 6 présente un joint d'étanchéité 70 fixé en haut de la traverse arrière 24 du pavillon 20, comportant un bourrelet circulaire qui vient au contact de la face intérieure du hayon 42, pour assurer une étanchéité évitant des entrées d'eau en cas de pluie. Lors de la descente du hayon 42 pour sa mise en place, le joint d'étanchéité 70 coulisse sur sa surface intérieure.

La figure 7 présente la partie supérieure du caisson arrière 26, comprenant en arrière du hayon 42 un bandeau transversal 74 comportant une face avant verticale, et en avant de ce hayon des plots 72 répartis transversalement, comprenant une face arrière inclinée vers le bas qui permet de guider la base du hayon 42 dans sa descente afin de l'ajuster dans la rainure entre ces plots et le bandeau transversal assurant un maintien efficace sur toute la largeur.

Le hayon arrière 42 constitue une fermeture légère et facilement amovible, qui peut être mise en place par toute personne par un simple glissement vertical. Son cintrage en forme de voûte lui assure de manière efficace une rigidité naturelle, ainsi que par son élasticité un blocage au fond des rainures 52 des profilés 40 qui empêche toute vibration et usure. Le hayon 42 peut rester notamment entrouvert après l'avoir légèrement soulevé, grâce à son blocage au fond des rainures 52.

En particulier le hayon 42 peut être transparent pour permettre une visibilité par l'arrière, ou coloré. Il peut supporter un marquage publicitaire.

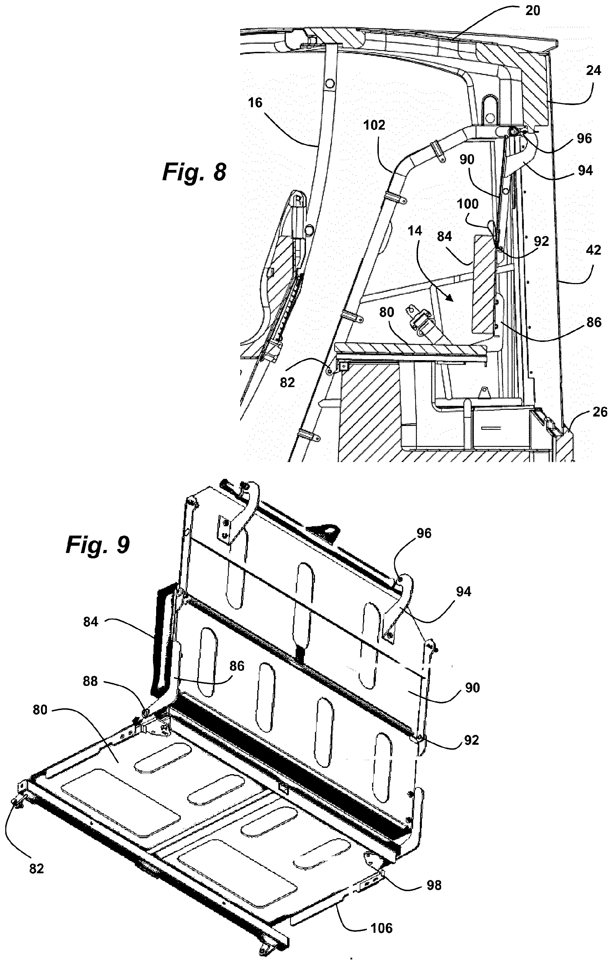

Les figures 8, 9 et 10 présentent la banquette arrière 14 comprenant un panneau réalisant une assise 80, présentant à l'avant en dessous de ce panneau, un premier pivot transversal 82 qui est fixé au-dessus du caisson arrière 26.

Un deuxième panneau réalisant un dossier 84 comporte de chaque côté à l'arrière une équerre 86 présentant une extrémité venant un peu en dessous de ce dossier, formant un deuxième pivot transversal 88 relié à l'arrière de l'assise 80. L'assise 80 et le dossier 84 reçoivent un rembourrage et une sellerie pour assurer le confort.

Un panneau supérieur 90 comporte à sa base un troisième pivot transversal 92, relié à la partie supérieure du dossier 84. Le panneau supérieur 90 comporte à l'arrière en partie supérieure, des pattes courbes 94 présentant à leur extrémité un quatrième pivot transversal 96 fixé à la traverse arrière 24 du pavillon 20.

Une sangle de tirage 100 est fixée en haut du dossier 84, au milieu de ce dossier.

Dans une position d'usage, l'assise 80 de la banquette arrière 14 repose à l'avant sur le premier pivot 82, l'arrière étant suspendu par l'intermédiaire du dossier 84 et du panneau supérieur 90, disposés sensiblement verticalement, aux pattes 94 fixées elles-mêmes à la traverse arrière 24 du pavillon 20.

De plus chaque côté du caisson arrière 26 comporte une butée en élastomère, qui supporte la partie arrière de l'assise 80 afin de répartir la charge avec la suspension venant du panneau supérieur 90 pour soulager les différents pivots transversaux de la banquette arrière 14. Avantageusement les butées en élastomère présentent une hauteur réglable, afin d'ajuster leur hauteur une fois le véhicule entièrement assemblé. La banquette arrière 14 peut recevoir deux personnes adultes, et éventuellement un jeune enfant.

Le véhicule comporte un petit coffre se trouvant dans le caisson arrière 26, entre les roues arrière 8 et en-dessous de l'assise 80, présentant un volume d'environ 100dm³. En soulevant le hayon 42 comme présenté figure 2, on a un accès par l'arrière au petit coffre.

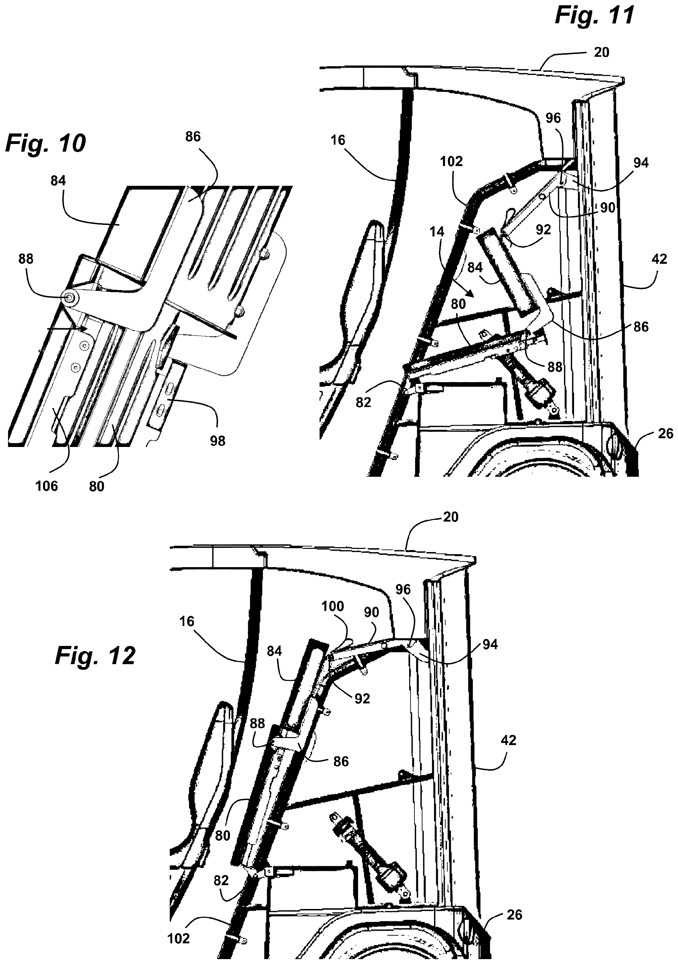

La figure 11 présente un opérateur soulevant la sangle de traction 100, ce qui soulève à la fois l'ensemble des panneaux de la banquette arrière 14, en faisant pivoter le panneau supérieur 90 sur son quatrième pivot 96 fixé à la carrosserie. En complément des ressorts, par exemple des vérins à gaz, peuvent assister le soulèvement de la banquette arrière 14 pour réduire les efforts.

La figure 12 présente la banquette arrière 14 complètement soulevée, comprenant l'assise 80 et le dossier 84 alignés dans un même plan légèrement incliné par rapport à la verticale, suivant un angle formé par des tubes latéraux de protection 102 du châssis supportant les panneaux latéraux 44. Le panneau supérieur 90 est disposé sensiblement horizontalement.

La figure 10 détaille la partie arrière de l'assise 80, comportant une tôle d'assise formant de chaque côté un pli longitudinal 106 tourné vers le bas. Une butée d'ouverture 98 forme une bande plate fixée à l'arrière du pli 106 par des vis engagées dans des lumières longitudinales de ce pli, afin de permettre un coulissement dans cette direction.

Chaque butée d'ouverture 98 comporte vers l'arrière un pliage qui constitue une butée réglable grâce aux lumières longitudinales, recevant l'appui d'une équerre 86 reliant le dossier 84 à l'assise 80, ce qui permet de régler la position alignée de ces deux panneaux une fois le véhicule assemblé.

En position ouverte la banquette 14 se bloque automatiquement, par la position du dossier 84 disposé un peu en arrière du deuxième pivot 88, qui applique par sa masse une force maintenant ce dossier sur les butées d'ouverture 98 liées à l'assise 80.

Pour la remise en place de la banquette arrière 14 il suffit de pousser sur l'assise 80 vers l'arrière, tout en maintenant la masse de la banquette par la sangle de traction 100 pour accompagner le mouvement de descente

On obtient comme présenté figure 2 en soulevant le hayon 42, l'accès à un grand coffre arrière présentant un volume d'environ 500dm³, fermé vers les côtés par des panneaux latéraux 44 se terminant sur les tubes latéraux 102, et vers l'avant par les trois panneaux de la banquette arrière 14. On notera qu'en fermant à clef le hayon arrière 42, on obtient un grand coffre sécurisé.

## Revendications

1. Véhicule comprenant à l'avant un pédalier de propulsion (10) prévu pour le conducteur, **caractérisé en ce qu'**il comporte à l'arrière de chaque côté un profilé (40) disposé sensiblement verticalement, comprenant une rainure (52) tournée vers l'intérieur du véhicule, et un hayon (42) formant une plaque coulissant dans les rainures (52) des deux profilés (40), qui est dans la direction transversale cintrée par une déformation élastique sous l'effet d'un serrage donné par la distance transversale entre ces deux rainures (54).

2. Véhicule selon la revendication 1, **caractérisé en ce que** les profilés (40) donnent aux bords du hayon (42) un angle compris entre 20 et 40° par rapport à la direction transversale du véhicule.

3. Véhicule selon la revendication 1 ou 2, **caractérisé en ce que** les bords latéraux du hayon (42) présentent un pliage (54) sur la longueur s'ajustant dans une forme correspondante des rainures (52) des profilés (40).

4. Véhicule selon la revendication 3, **caractérisé en ce que** les rainures (52) des profilés (40) comportent dans une section transversale deux terminaisons adaptées pour recevoir les pliages (54) du hayon (42) qui peut être retourné suivant un axe vertical.

5. Véhicule selon l'une quelconque des revendications précédentes, **caractérisé en ce que** le hayon (42) comporte une découpe centrale (46) formant une poignée.

6. Véhicule selon l'une quelconque des revendications précédentes, **caractérisé en ce qu'**il comporte un joint d'étanchéité (70) prévu pour venir en appui en haut du hayon (42) sur sa face intérieure.

7. Véhicule selon l'une quelconque des revendications précédentes, **caractérisé en ce que** le hayon (42) est formé dans une plaque en acrylonitrile butadiène styrène « ABS », en polycarbonate « PC » ou en polyéthylène « PE ».

8. Véhicule selon l'une quelconque des revendications précédentes, **caractérisé en ce qu'**il comporte une banquette arrière (14) disposée transversalement, comprenant un panneau d'assise (80) et un panneau de dossier (84) qui sont reliés par des pivots transversaux (82, 88) permettant leur soulèvement.

9. Véhicule selon la revendication 8, **caractérisé en ce que** le panneau d'assise (80) comporte à l'avant un premier pivot transversal (82) relié au châssis (2) du véhicule, et le panneau de dossier (84) comporte à la base un deuxième pivot transversal (88) relié à l'arrière du panneau d'assise (80).

10. Véhicule selon la revendication 9, **caractérisé en ce que** la partie supérieure de l'assise (84) est reliée par un troisième pivot transversal (92) à un panneau supérieur (90), qui est lui-même relié par un quatrième pivot transversal (96) à une partie supérieure de la carrosserie (24).
